**Europäisches Patentamt**

**European Patent Office**

**Office européen des brevets**

(19)

(11) Veröffentlichungsnummer: **0 140 338**

**A2**

(12) # EUROPÄISCHE PATENTANMELDUNG

(21) Anmeldenummer: **84112836.6**

(22) Anmeldetag: **25.10.84**

(51) Int. Cl.⁴: **C 08 J 5/12**
C 08 L 23/16, C 08 J 7/04

(30) Priorität: **28.10.83 DE 3339249**

(43) Veröffentlichungstag der Anmeldung:
**08.05.85 Patentblatt 85/19**

(84) Benannte Vertragsstaaten:
**AT CH DE FR GB IT LI NL SE**

(71) Anmelder: **METZELER KAUTSCHUK GMBH**
**Gneisenaustrasse 15**
**D-8000 München 50(DE)**

(72) Erfinder: **Koch, Werner**
**Hochkönigstrasse 54**
**D-8000 München 82(DE)**

(72) Erfinder: **Krüger, Gerhard**
**Talackerweg 11**
**D-6942 Mörlenbach 2(DE)**

(74) Vertreter: **Michelis, Theodor, Dipl.-Ing.**
**Gneisenaustrasse 15**
**D-8000 München 50(DE)**

(54) **Verfahren zum Verbinden eines EPDM-Profils mit PVC-oder Holzteilen, EPDM-Profil sowie Quellschweisslösung zur Durchführung dieses Verbindungsverfahrens.**

(57) Zumindest ein Teil der Oberfläche eines üblichen, noch nicht vulkanisierten EPDM-Profils wird mit einer dünnen, nicht vulkanisierbaren Schicht auf der Basis einer EPDM-Mischung versehen; bei der anschließenden Vulkanisation des EPDM-Profils wird diese dünne Schicht einer Wärmebehandlung unterzogen, und dadurch mit dem EPDM-Profil verbunden, so daß dieses durch Heiß- oder Quell-Schweißen mit PVC- oder Holzteilen verbunden werden kann. Es werden Mischungen für die Herstellung der dünnen Schicht sowie für eine Quellschweißlösung angegeben. Zweckmäßigerweise werden das EPDM-Profil und die dünne Schicht durch gemeinsame Extrusion hergestellt.

0140338

METZELER KAUTSCHUK GMBH      München,18.10.1984
München                      Unser Zeichen MK 257 P83EP


Verfahren zum Verbinden eines EPDM-Profils mit PVC-
oder Holzteilen, EPDM-Profil sowie Quellschweißlösung
zur Durchführung dieses Verbindungsverfahrens


Die Erfindung betrifft ein Verfahren zum Verbinden
eines EPDM-Profils mit PVC- oder Holzteilen, ein EPDM-
Profil zur Durchführung dieses Verfahrens sowie eine
Quellschweißlösung zur Durchführung dieses Verbindungsverfahrens.

Insbesondere wegen des günstigen Preises und der hohen
Ozon-Beständigkeit werden für die Abdichtung von PVC-
Fenstern EPDM-Profile verwendet, die zwischen den
stranggepreßten PVC-Profilen einerseits und den Fensterscheiben andererseits angeordnet werden. Zur Fixierung
der EPDM-Profile an den PVC -Fenstern dienen im allgemeinen in das PVC-Prodil eingeschnittene Nuten. Hierzu ist jedoch ein zusätzlicher Arbeitsgang erforderlich, der relativ exakt ausgeführt werden muß, um die
sichere Fixierung des EPDM-Profils zu gewährleisten.

Ähnliche Probleme treten bei der Verwendung von EPDM-
Profilen für die Abdichtung von Holzfenstern auf, wie
es beispielsweise für die Sanierung von Holzfenstern
- nach der Lackentfernung - angestrebt wird. Auch
hierzu müssen im allgemeinen zusätzliche Nuten in die
Holzfensterprofile eingefräst werden, so daß sich eine
mühsame und aufwendige Montage ergibt.

Der Erfindung liegt deshalb die Aufgabe zugrunde, ein Verfahren zur Verbindung eines EPDM-Profils mit PVC- oder Holzteilen, ein EPDM-Profil zur Durchführung dieses Verbindungsverfahrens sowie eine Quellschweißlösung zur Durchführung dieses Verbindungsverfahrens zu schaffen, bei denen die oben erwähnten Nachteile nicht auftreten.

Insbesondere soll die Befestigung des EPDM-Profils an PVC- oder Holzteilen ohne die Ausbildung einer Nut in den entsprechenden Teilen möglich sein.

Dies wird erfindungsgemäß durch die in den kennzeichnenden Teilen der Ansprüche 1, 6 und 8 angegebenen Merkmale erreicht.

Die mit der Erfindung erzielten Vorteile beruhen insbesondere darauf, daß ein übliches, beispielsweise durch Extrusion hergestelltes, noch nicht vulkanisiertes EPDM-Profil auf einem Teil seiner Oberfläche mit einer dünnen Schicht aus einem nicht-vulkanisierbaren Material auf der Basis eines Sequenz-EPDM versehen wird.

Bei der Wärmebehandlung der dünnen Schicht während der Vulkanisation des Profils läuft eine Grenzflächenvulkanisation zwischen dem EPDM des Profils einerseits und dem Material der dünnen Schicht andererseits ab, so daß die dünne Schicht praktisch einstückig und unlösbar mit dem EPDM-Profil verbunden wird, ohne ihre Schweißfähigkeit zu verlieren, wodurch diese Schicht durch thermische Verschweißung und/oder Quellverschweißung mit PVC- oder Holzteilen verbunden werden kann.

Gute Ergebnisse werden mit einer Quellschweißlösung auf der Basis von chlorierten Lösungsmitteln = Tetrahydrofuran, Sequenz-EPDM, Verstärkerharz und Hexamethylentetramin erhalten. Dadurch kann das EPDM-Profil kontinuierlich auf PVC-Rahmen oder Holzteile aufgeklebt werden.

Als Alternative hierzu ist auch Heißschweißen, beispielsweise durch Heißluft, Mikrowellen oder IR-Strahlung möglich. Nach einer weiteren Variante werden die dünnen Schichten des EPDM-Profils direkt auf die heiße, noch nicht ausgehärtete Oberfläche der PVC-Teile am Ende ihrer Herstellung aufgebracht und dadurch fest mit dieser verbunden.

Beim Aufschweißen des EPDM-Profils auf Holzteile dringt das Material der dünnen Schicht beim Heißschweißen oder Quellschweißen in das Holz ein und verbindet sich damit, wodurch ebenfalls eine einwandfreie Verbindung entsteht, so daß die Sanierung von Holzfenstern möglich wird, insbesondere ohne das nachträgliche Einfräsen von Nuten.

Obwohl es im Prinzip möglich ist, das noch nicht vulkanisierte EPDM-Profil einerseits und die dünne Schicht andererseits getrennt, beispielsweise durch getrennte Extrusionsverfahren, herzustellen, dann miteinander zu verbinden und anschließend das EPDM-Profil zu vulkanisieren, werden nach einer bevorzugten Ausführungsform das EPDM-Profil und die dünne Schicht gemeinsam extrudiert und damit als kontinuierlicher Strang hergestellt.

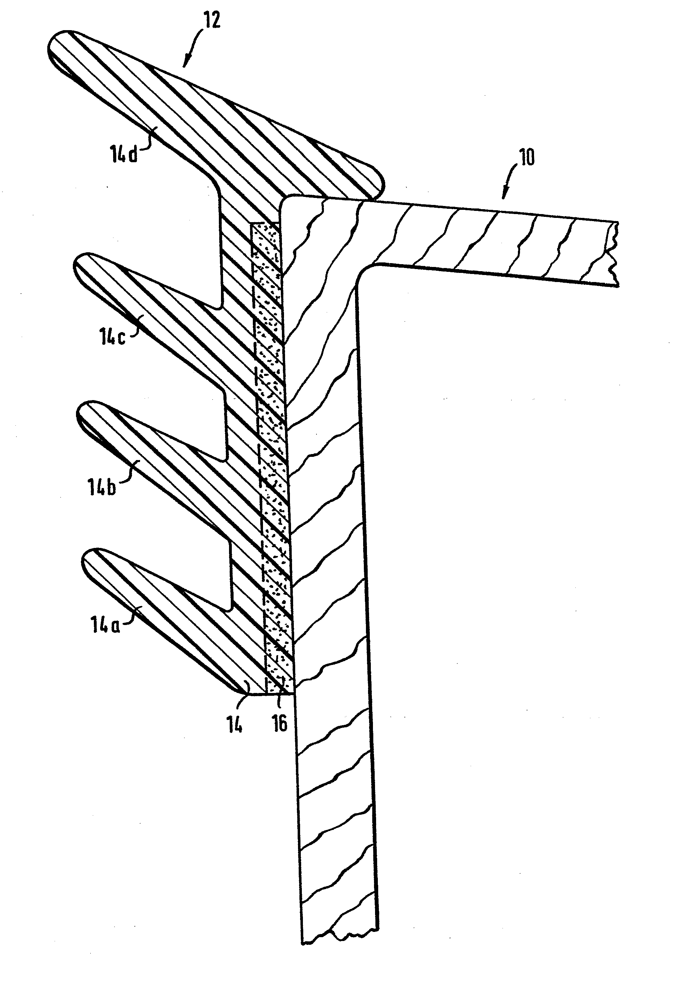

Die Erfindung wird im folgenden anhand von Ausführungsbeispielen unter Bezugnahme auf die beiliegende, schematische Zeichnung näher erläutert, deren einzige Figur
einen Schnitt durch ein übliches EPDM-Profil zeigt,
das mittels einer dünnen Zwischenschicht auf ein PVC-
oder Holzteil aufgebracht ist.

Zur Herstellung dieses EPDM-Profils verwendet man die
übliche Mischung, wie sie für eine Fertigung von EPDM-
Dichtungen für Fenster eingesetzt wird und DIN 7863
erfüllt. Parallel hierzu wird eine weitere, nichtvulkanisierbare Mischung vorbereitet, die im folgenden
auch als "Sondermischung" bezeichnet werden soll. Diese Sondermischung hat die folgende Zusammensetzung:

| | | |
|---|---|---|
| Sequenz EPDM | 100 | Gew.-Teile |
| Emulsions PVC | 33 | " " |
| Polyisobutylen | 10 | " " |
| Cumaron-Harz | 13 | " " |
| Weichmacher (Alkylsulfon-<br>säureester des Phenols) | 7 | " " |
| Ruß N 550 | 67 | " " |
| Kaolin | 80 | " " |
| Fettsäure-Derivate | 10 | " " |
| Stearinsäure | 3 | " " |
| CaO | 10 | " " |
| | 333 | Gew.-Teile |

Diese beiden Mischungen, also die übliche Mischung für
die Herstellung von EPDM-Profilen und die Sondermischung,
werden gemeinsam extrudiert, wodurch ein EPDM-Profil
entsteht, das zumindest auf einem Teil seiner Oberfläche
mit einer dünnen Schicht aus der Sondermischung versehen ist. Die dünne Schicht hat eine Stärke von etwa
0,2 bis 1,5 mm, wobei aus extrusionstechnischen Gründen mit einer Schichtstärke ab 0,5 mm gearbeitet werden
sollte.

In den plattenförmigen Grundteil 14 des EPDM-Profils 12 ist die dünne Schicht 16 aus der Sondermischung integriert, d.h., diese dünne Schicht 16 erstreckt sich über die gesamte freie Fläche des Grundteils 14.

Nach der gemeinsamen Extrusion durchläuft das EPDM-Profil 12 mit der dünnen Schicht 16 eine Salzbadanlage oder eine Heißluftanlage, wo es bei Temperaturen zwischen 180° und 220°C, insbesondere bei 190° bis 200°C, vulkanisiert wird. Bei dieser Vulkanisation des EPDM-Profils 12 wird die dünne Schicht 16 zwar nicht vulkanisiert, d.h. sie enthält nach wie vor unvernetztes EPDM, jedoch gleichzeitig einer Wärmebehandlung unterzogen; das Material dieser dünnen Schicht 16 kann durch Heiß- oder Quellschweißen mit einem Hart-PVC oder Holz-Teil 10 verbunden werden.

Für das Heißschweißen werden das EPDM-Profil 12 und hier insbesondere das Material der dünnen Schicht 16 und/oder das PVC- oder Holzteil 10 auf eine Temperatur von etwa 120°C erwärmt, wodurch die dünne Schicht 16 plastisch wird und sich fest mit dem PVC- oder Holzteil 10 verbindet.

Die erforderliche Wärme kann durch Heißluft, Mikrowellen oder IR-Strahlung erzeugt werden.

Als Alternative hierzu kann die dünne Schicht 16 des EPDM-Profils 12 auch durch eine Quellschweißlösung mit dem PVC- oder Holzteil 10 verbunden werden. Eine solche Quellschweißlösung enthält die folgende Mischung:

| Sequenz EPDM | 65 Gew.-Teile |   |
|---|---|---|
| Polychloroprene | 35 " | " |
| Polyisobutylen | 7 " | " |
| Bitumen | 18 " | " |
| Cumaron-Harz | 12 " | " |
| Ruß N 550 | 45 " | " |
| Kreide - | 110 " | " |
| Fettsäure-Derivate | 5 " | " |
| Magnesiumoxid | 9 " | " |
| Verstärkerharz (Novolake) | 13 " | " |
| Hexamethylentetramin | 3 " | " |
|   | 322 Gew.-Teile |   |

Diese Mischung wird mit folgendem Lösungsansatz für die Quellschweißlösung verwendet:

| Mischung | 100 Gew.-Teile |
|---|---|
| Tetrahydrofuran | 300 Gew.-Teile |
| Perchlorethylen | 200 Gew.-Teile |
|   | 600 Gew.-Teile |

| Isocyanat | 60 Gew.-Teile |
|---|---|

Das Lösungsmittel Tetrahydrofuran quillt PVC an und bereitet das PVC-Teil auf die Verbindung vor, während das Lösungsmittel Perchlorethylen die dünne Schicht 16 des EPDM-Profils 12 anquillt und dadurch auf die Verbindung vorbereitet.

Das Isocyanat wird erst kurz vor der Verarbeitung eingerührt und dient dazu, eine chemische Verbindung zu gewährleisten. Die Topfzeit des fertigen Lösungsansatzes beträgt etwa 2 Stunden.

Durch eine Änderung des Verhältnisses von Lösungsmittel/Mischung kann die Viskosität des Lösungsansatzes variiert und den jeweiligen Bedingungen angepaßt werden.

Dieser Lösungsansatz wird auf die dünne Schicht 16 und/oder auf die zugehörige Oberfläche des PVC- oder Holzteils 10 aufgebracht; anschließend werden dann diese beiden Elemente gegeneinander gedrückt, wodurch ohne jede Erwärmung die Verbindung hergestellt wird.

Für viele Anwendungsfälle reicht es auch aus, wenn man nur eines der beiden erwähnten Lösungsmittel, ggf. mit einem Isocyanat-Zusatz, verwendet.

0140338

METZELER KAUTSCHUK GMBH          München, 18.10.1984

München                          MK 257 P 83 EP

Patentansprüche

1.    Verfahren zur Verbindung eines EPDM-Profils mit
PVC- oder Holzteilen,
d a d u r c h   g e k e n n z e i c h n e t ,   daß
a) zumindest ein Teil der Oberfläche des EPDM-Profils
   mit einer dünnen, unvulkanisierbaren Schicht einer
   Gummi-Mischung auf der Basis von Mischpolymerisaten
   aus Ethylen und Propylen mit oder ohne Ter-Komponente (EPDM/EPM) mit einem Ethylengehalt von mindestens
   50 Gew.-Teile versehen wird, daß
b) das EPDM-Profil anschließend bei 180°C bis 220°C
   vulkanisiert und dadurch die dünne Schicht einer
   entsprechenden Wärmebehandlung unterzogen wird, und
   daß
c) die dünne Schicht mit dem PVC- oder Holzteil thermisch
   und/oder durch Lösungsmittel bzw. Quellschweißlösung
   verschweißt wird.

2.    Verfahren nach Anspruch 1,  dadurch gekennzeichnet
daß das EPDM-Profil mit einer dünnen Schicht einer
Gummi-Mischung auf der Basis von Sequenz EPDM, Emulsions-
PVC, Harz und den üblichen Additiven versehen wird.

3.    Verfahren nach einem der Ansprüche 1 oder 2,
dadurch gekennzeichnet, daß das thermische Verschweißen
durch Heißluft, Mikrowellen oder IR-Strahlung erfolgt.

4. Verfahren nach einem der Ansprüche 1 bis 3, dadurch gekennzeichnet, daß das EPDM-Profil in einem Salzbad durch Heißluft oder durch UHF vulkanisiert wird.

5. Verfahren nach einem der Ansprüche 1 bis 4, dadurch gekennzeichnet, daß das EPDM-Profil und die dünne Schicht durch gemeinsame Extrusion hergestellt werden.

6. EPDM-Profil zur Durchführung des Verbindungsverfahrens nach einem der Ansprüche 1 bis 5, dadurch gekennzeichnet, daß zumindest ein Teil der Oberfläche des EPDM-Profils (14) mit einer dünnen, unvulkanisierbaren Schicht (16) einer Gummi-Mischung auf der Basis von Mischpolymerisaten aus Ethylen und Propylen mit oder ohne Ter-Komponente (EPDM/EPM) mit einem Ethylengehalt von mindestens 50 Gew.-Teilen versehen ist.

7. EPDM-Profil nach Anspruch 6, dadurch gekennzeichnet, daß die dünne Schicht (16) aus Sequenz-EPDM, Emulsions-PVC, Harz und den üblichen Additiven besteht.

8. Quellschweißlösung für die Durchführung des Verbindungsverfahrens nach einem der Ansprüche 1 bis 5, gekennzeichnet durch eine in einem Lösungsmittel gelöste Mischung auf der Basis von Sequenz-EPDM, einem Verstärkerharz und einem Formaldehyd-Donor.

9. Quellschweißlösung nach Anspruch 8, dadurch gekennzeichnet, daß als Verstärkerharze Phenolharze vom Typ Novolak verwendet werden.

10. Quellschweißlösung nach Anspruch 8 oder 9,
dadurch gekennzeichnet, daß als Formaldehyd-Donor
Hexamethylentetramin verwendet wird.

11. Quellschweißlösung nach einem der Ansprüche 8
bis 10, dadurch gekennzeichnet, daß chlorierte Lösungsmittel verwendet werden.

12. Quellschweißlösung nach Anspruch 11, dadurch
gekennzeichnet, daß als Lösungsmittel Tetrahydrofuran
und Perchlorethylen verwendet werden.

13. Quellschweißlösung nach einem der Ansprüche 8
bis 12, dadurch gekennzeichnet, daß die Lösung 5 bis
15 Gew.-% Isocyanat enthält.

0140338

12

14d

10

14c

14b

14a

14   16